(19) Europäisches Patentamt
European Patent Office
Office européen des brevets

(11) **EP 3 340 073 A1**

(12) **EUROPEAN PATENT APPLICATION**

(43) Date of publication:
**27.06.2018 Bulletin 2018/26**

(51) Int Cl.:
***G06F 17/30*** *(2006.01)*

(21) Application number: **16306770.5**

(22) Date of filing: **22.12.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **SUN, Yifan**
**Princeton, NJ New Jersey 08540 (US)**

• **GOELA, Naveen**
**Princeton, NJ New Jersey 08540 (US)**
• **HAMIDI-RAD, Shahab**
**Princeton, NJ New Jersey 08540 (US)**
• **SHARTZER, Lee D.**
**Culver City, CA California 90232 (US)**
• **DING, Weicong**
**Princeton, NJ New Jersey 08540 (US)**

(74) Representative: **Ståhl, Björn Niclas**
**TECHNICOLOR**
**1-5, rue Jeanne d'Arc**
**92130 Issy-les-Moulineaux (FR)**

(54) **SYSTEMS AND METHODS FOR PROCESSING OF USER CONTENT INTERACTION**

(57) A server device (120) collects (S304) tags input by a plurality of users for a plurality of clips, segments of media items, clusters (S306) users into interest groups based on similarities of tags for the clips, adapts (S308) parameters for a content related algorithm for a user based on the at least one interest group to which the user belongs, and provides (S310), using the content related algorithm, clips to the user.

Figure 3

EP 3 340 073 A1

**Description**

TECHNICAL FIELD

The present disclosure relates generally to user content interaction and more particularly with use of information regarding such interaction.

BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

There are many conventional solutions that for example provide suggested content to a user.

EP 2432243 discloses an Electronic Program Guide that creates a playlist of series assets such as episodes of a TV series. Assets from a VoD server can be included into a playlist for a given series.

US 2014/0074866 discloses extracting information used on user interaction with a video file and using the information to enhance metadata for the video file.

One disadvantage of such solution is that there is lack of granularity. For example, if two users like The Lion King, one because he is three years old and likes the characters, the other because she is a graphic designer and likes the artwork, then though they like the same movie, they are not similar users.

It will be appreciated that it is desired to have a solution that overcomes at least part of the conventional problems related to use of user interaction with content items.

SUMMARY OF DISCLOSURE

In a first aspect, the present principles are directed to a method at a server device comprising collecting tags for a plurality of clips, the clips being segments of media items, the tags input by a plurality of users, clustering users into interest groups based on similarities of the tags input by the users for the clips, adapting parameters for a content related algorithm for a user based on the at least one interest group to which the user belongs, and providing, using the content related algorithm, clips to the user.

Various embodiments of the first aspect include:

- That the clips are associated with a plurality of users.
- That the content related algorithm is for at least one of filtering of clips, themed stitching of clips and recommendation of clips. The recommendation of clips can comprise proposing a playlist of clips.
- That the providing comprises preparing clips for viewing by the user.
- That the method further comprises, between the collecting and the clustering, performing tag reduction for the tags. The tag reduction can comprise comparing tags pairwise to determine similarity and merging tags of each pair for which the similarity is below a given threshold.

In a second aspect, the invention is directed to a server device comprising a communictions interface configured to collect tags for a plurality of clips, the clips being segments of media items, the tags input by a plurality of users and at least one hardware processor configured to cluster users into interest groups based on similarities of tags for the clips, adapt parameters for a content related algorithm for a user based on the at least one interest group to which the user belongs, and provide, using the content related algorithm, clips to the user.

Various embodiments of the second aspect include:

- That the clips are associated with a plurality of users.
- That the content related algorithm is for at least one of filtering of clips, themed stitching of clips and recommendation of clips. The recommendation of clips can comprise proposing a playlist of clips.
- That the providing comprises preparing clips for viewing by the user.
- That the method further comprises, between the collecting and the clustering, performing tag reduction for the tags. The tag reduction can comprise comparing tags pairwise to determine similarity and merging tags of each pair for which the similarity is below a given threshold.

In a third aspect, the present principles are directed to a computer program comprising program code instructions executable by a processor for implementing the steps of a method according to any embodiment of the first aspect.

BRIEF DESCRIPTION OF DRAWINGS

Preferred features of the present principles will now be described, by way of non-limiting example, with reference to the accompanying drawings, in which:

Figure 1 illustrates an exemplary system according to a first embodiment of the present principles;
Figure 2 illustrates a method according to the present principles;
Figure 3 illustrates exemplary interactions according to the present principles;
Figure 4 illustrates a method of tag reduction and identification of user similarity according to the present principles; and
Figure 5 illustrates a method for tag reduction according to the present principles.

DESCRIPTION OF EMBODIMENTS

The present principles concern segmentation and stitching of multimedia clips (hereinafter "clips"). A clip is a multimedia item that preferably is short - preferably from some seconds up to 30 seconds, but it can also be minutes long - and comprises media content that is part of a longer content item including but not limited to movies, TV programs, songs, soundtracks, and podcasts.

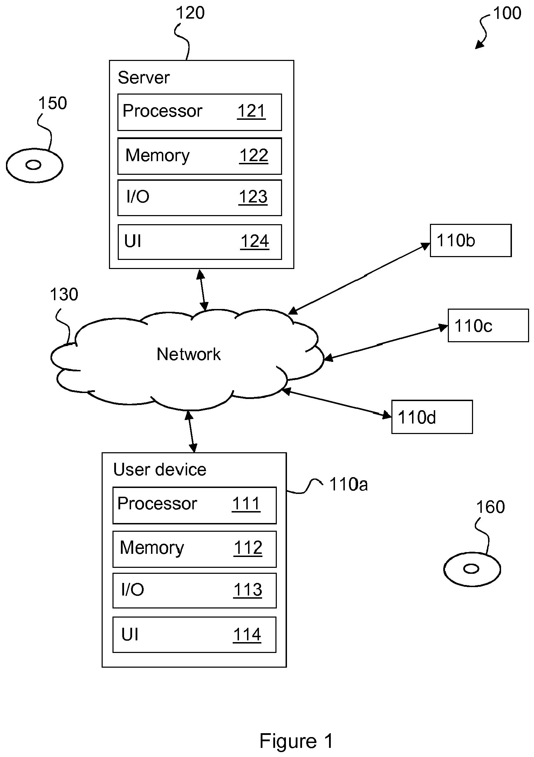

Figure 1 illustrates an exemplary system 100 according to a first embodiment of the present principles. The system 100 comprises a plurality of user devices 110a-110d (that can be referred to jointly as 110), a server 120 and an interconnecting network 130 such as for example the Internet.

Although only illustrated for user device 110a, each user device 110 comprises at least one hardware processing unit ("processor") 111 configured to execute instructions for performing user device functions, memory 112 configured to store at least these instructions, a communications interface ("I/O") 113 configured for communication with other devices, and a user interface ("UI") 114. A user device 110 can for example be a laptop, a smartphone or a tablet. Non-transitory storage media 150 stores instructions that, when executed by a processor, perform the functions of the server 120 as further described hereinafter. Non-transitory storage media 160 stores instructions that, when executed by a processor, perform the functions of a user device 110 as further described hereinafter.

The server 120 also comprises at least one hardware processing unit ("processor") 121 configured to execute instructions for performing server functions, memory 122 configured to store at least these instructions, a communications interface ("I/O") 123 configured for communication with other devices, and preferably a user interface ("UI") 124. It will be understood that the server 120 can be embodied in one or more physical devices; in the latter case, it can be implemented in the Cloud or at least partly on the user devices 110.

The skilled person will appreciate that the illustrated devices are very simplified for reasons of clarity and that real devices in addition would comprise features such as internal connections and power supplies.

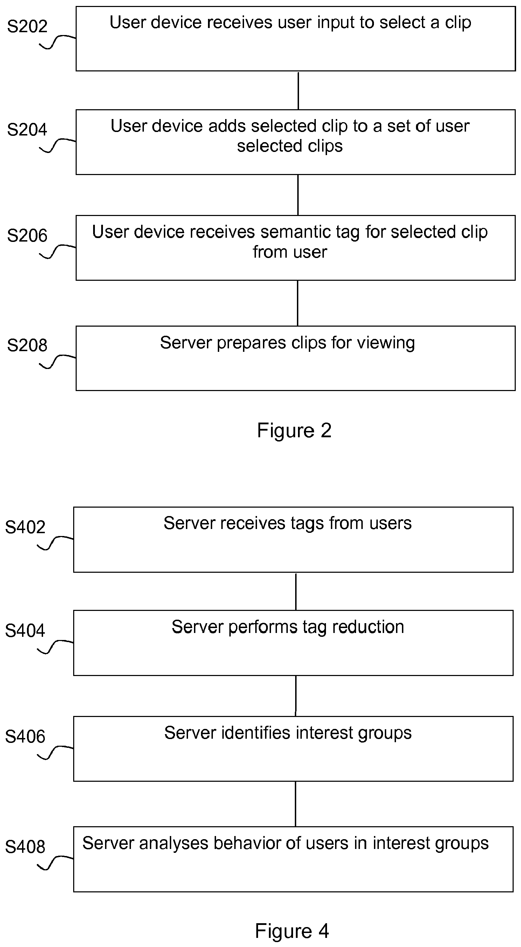

Figure 2 illustrates a method according to the present principles.

In step S202, a user device 110 receives user input to select a clip. The user can select an entire media item, but can also do this by selecting part of a media item longer then the clip. Selecting part of a media item can be done by selecting, preferably while the media item plays, the beginning of the clip and then deselecting at the end of the clip. Using for example a mouse, the user could click a button at the beginning and keep pressing the button until the end of the clip, but it could also be done by clicking once at the beginning and again at the end. The selection can also be done on a mobile device using a touch-and-release action, or on a set-top box using available buttons.

In step S204, the user device 110 adds the selected clip to a set of clips selected by the user. The set of clips capture an experience that can be shared with a friend or larger community, such as jokes, song clips, appearances of a cameo actor, fight scenes, notable phrases in music, etc. As already mentioned, it is preferred that they are short.

In step S206, which also can be performed before step S204, the user device 110 receives from the user a semantic tag for the clip. It will be appreciated that a clip may have a plurality of tags that can be given by the user at one or a plurality of occasions (i.e., the user may later add or modify tags for the clip). It can also be possible for other users to add or modify tags for clips.

The type of tags can be one or a plurality of the following exemplary tag categories and tag values:

-    an expression of preference, such as "like"/"dislike" or 1-5 star rating,

-    emojis,

-    short catch phrases,

- longer annotations,

- a position of a slidebar according to opposing qualities, such as for example funny/sad, engaging/boring, and conservative/liberal,

- tags indicating the occurrence of a specific category of events, such as an appearance of a character or actor, a song in the middle of a movie, the beginning of a fight scene or a scene building to a terrifying event,

- user-defined tags, artistic or typed, and

- clips to be filtered *away* from the content, such as adult content in children's movies, spoilers, gory scenes, scary scenes, and scenes where Russell Crowe sings.

The start and stop times collected from clip tagging also can be used to identify natural starting and stopping points of each clip. Indeed, it has been observed that the start and stop times input by the users often correspond to "natural" boundaries such as scenes. The stop and start times, in particular if aggregated from a plurality of users, can thus also be used for scene segmentation for other application.

In step S208, the server 120 prepares clips for viewing. It is possible to prepare only the user's own clips for viewing, which can be interesting if the user has a great number of clips of which some may not even have been viewed by the user yet. However, it can be more interesting to prepare clips coming from a plurality of users. Preparing clips for viewing can be done upon request from a user, but it can also be done automatically. The clips can be prepared using any one of at least three different methods: filtering, themed stitching and content recommendation.

For filtering, which is generally prepared upon user request, the server 120 may proceed in different ways, such as:

- Filtered viewing of a particular content. The content may be specific appearances or events, such as scenes from "Frozen" where only Elsa is present, or concertos with violin solos. The particular content may also be content with specific tags, like clips tagged with "funny", "sad", emoji-raised-eyebrow, and so on. Using object recognition, the particular content may also be restricted to scenes where a particular object, such as a car of a certain make, appears. The last case is useful in marketing to allow companies to identify when their products are referenced in media content.

- Filtered viewing based on recommendations across a social network community or interest group. The content is restricted to clips or segments with rating above a certain threshold, so that a user can effectively "skip the boring parts".

- A negative viewing mode that removes clips with certain tags. Clips can be selected and tagged as inappropriate or unwanted content. For example, content with clips tagged as explicit, vulgar or violent can be shown to children using this mode in which the tagged clips are skipped or removed. Similarly, this can remove spoilers from TV shows. The clips deemed "spoilers", "explicit" or the like may be chosen by popular vote across a specific population of users or by the entire set of users.

An outcome of this is that a user watches content composed only of clips that are highly associated with a particular tag, i.e., the filtered clips or content. To calculate this, a content tag histogram is composed, and the filtered content contains clips with a significant number of tags, created by other members of the interest group. The start-stop positions of each clip is preferably selected using commonly picked edge positions during clip selection, to ensure that no awkward breaks are present.

For themed stitching, which is preferably prepared automatically, the server 120 may proceed in different ways, such as:

- Themed clip streaming that gathers clips of a same category, such as Seinfeld jokes, or bad fight scenes in Jacky Chan movies, etc.

- A storyboard composed of a collage of clips. Users often use movie references to connect socially. Using user tag data, a recommended storyboard can be created automatically, for specific uses such as a dating profile introduction video, or a negative ad campaign for a politician.

The clips pulled for the stitched composition are the most commonly tagged clips from that particular interest group, with tags associated with a desired effect. For example, for a dating profile video, the clips are those most commonly tagged as romantic, or with tags similar to romance tags, from common interest groups of which the user is a member.

As for content recommendation, the server 120 could prepare recommendations as follows:

- In subscription-type services like Netflix, the user has access to a wide variety of media. In video-on-demand type services like Google Play or M-GO, the user typically has access to a plurality of movies or TV episodes (or seasons of TV episodes of series). Based on the clip tags of a user, the server 120 can generate a playlist of themed stream of content that is already purchased by the user.

- A customized educational program. Video lectures tend to be richly annotated and tagged by students in order to give feedback to instructors of online educational programs, for example to mark confusing parts or clarifying parts and questions the students had at a given part of the lecture. Using such tags from a user (i.e., a student), the server 120 can generate customized lectures by analysing the user's learning preferences over the course of a semester, or an entire educational experience.

Content commonly tagged suggests it is watched many times, since it is not expected for a user to tag during a first viewing. Therefore content recommended to a user is preferably content that is not watched, and which is commonly tagged in the interest groups of which the user is a member. The interest group label preferably accompanies the recommendation; for example: "Since you like terrible jokes, we believe you should watch these George Carlin standup routines."

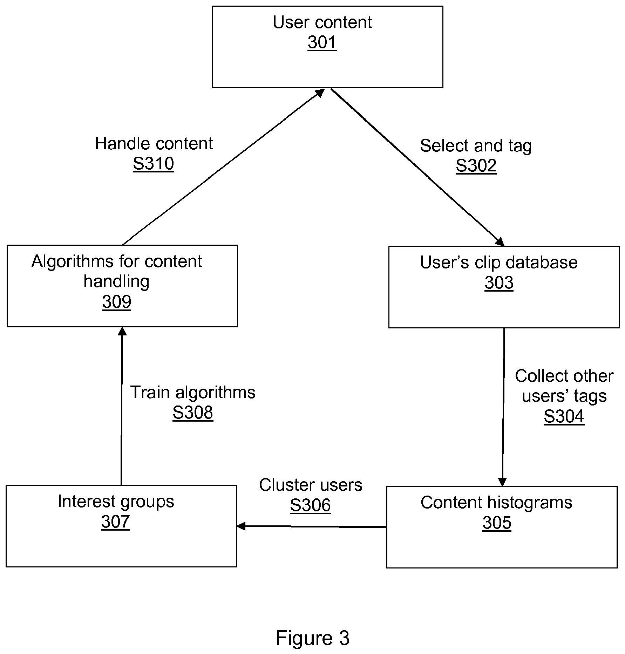

Figure 3 illustrates exemplary interactions according to the present principles. A user with personal content 301 selects and tags, in step S302, a clip from this content, as explained with reference to steps S202 and S206 of Figure 2. The selected clip is then part of the user's clip database 303 that is shared with other users.

The tags given to the user's clips by the other users are collected, in step S304, to form content histograms 305 that, for each clip, comprise the collected tags for that clip. The content histograms comprise clips from a plurality of users.

Different users can then be clustered, in step S306, based on similarities of tags for the clips, as will be further explained hereinafter. The different clusters form different interest groups 307. A given user may belong to a plurality of interest groups.

For a given user, information for the interest group or groups to which the user belongs can be used to train, in step S308, the engines 309 (aka algorithms) for filtering, themed stitching and content recommendation for the user. Training an engine means at least adapting parameters for the engine. This is to say that content that is appreciated by a certain number of other interest group members is likely to be appreciated by all of the interest group members. In other words, the tagging actions of interest group members influence the filtering/stitching/recommendation for the other members of the interest group.

Finally, as described with reference to step S208 in Figure 2, content is filtered/stitched/recommended, in step S310, to the user based on the trained engines 309.

As can be seen, the user interest groups 307 play an important role in the training of the filtering, stitching, and recommendation engines 309. A reason for this is that while content may be filtered, stitched, or recommended using suggestions from the user's connections in a social network, friends and other connections do not always have identical or even similar tastes. In addition, in social networks, it is often even preferable to provide new suggestions; in other words: to be a trendsetter. Additionally, by not restricting to a user's social network, it is possible to tap into a much broader user database, as tagged inputs can be collected globally and across demographics. At the same time, it is possible to preserve the sparsity of the data (to avoid overloading the numerical computations) by identifying users as members of a small number (say, a few hundred or a thousand) of interest groups, thus efficiently summarizing user behavior.

Ideally, interest groups for a user are chosen based on an aggregated collection of user input data such as the tags. However, such data can be sparse, and in order to incorporate a diverse alphabet (emojis, annotations, etc.) there may be redundant tags. In particular, to allow for user expressiveness, the library of tags may be numerous (thousands or more). If user annotations are used as well, the number of unique labels will grow infinitely. Even so, the number of different semantics the users wish to express (and is shared across a significant population) may be very limited.

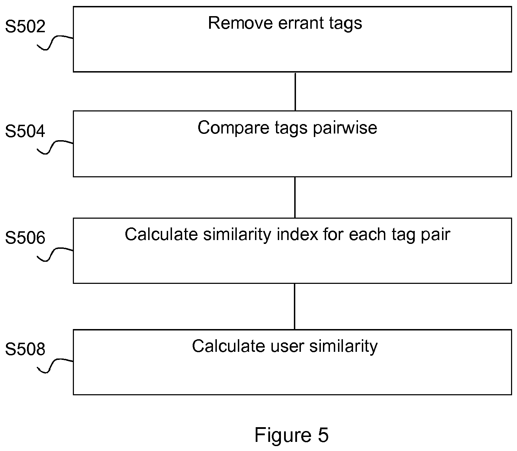

Figure 4 illustrates a method of tag reduction and identification of user similarity according to the present principles. In step S402, a server (e.g. server 120 in Figure 1) receives one or more tags input by one or more users. In step S404, the server performs tag reduction - see Figure 5 for details - to obtain user similarities that are used, in step S406, to identify interest groups. As already described these interest groups can be used to train the filtering, stitching, and recommendation engines 309.

In step S408, the server analyses the behaviour of users in an interest groups by analysing the tags their users input. The step is preferably performed for each interest group, at least those comprising users who provided new tags in step S402. The analysis results in identification of similarly used tags, in other words different tags that are used to express the same (or at least similar) semantics. The similar tags are then used as input for the tag reduction in step S404.

There are several ways of addressing tag reduction; several simple clustering methods exist in literature. A simple solution is to have a database of with categories and tags that "belong" to the category. For example, the category "funny" could comprise "lol", "haha", "lmao", and a laughing emoji) and the category "angry" could comprise "smh", "omg", "wtf", etc.

Another simple solution is to assume that tags that often appear in the same clips are similar (using a method similar to that for user similarity.)

A further solution is to use low-dimensional numerical vector representation of words, phrases, and images such as emojis (or emoticons), brought about by factorizing a semantic similarity matrix. A first example of a paper in this field was written by Mikolov et al., "Distributed Representations of Words and Phrases and their Compositionality". (NIPS) 2013. Their approach has been extended to emojis by Barbieri et al., "What does this Emoji Mean? A Vector Space Skip-Gram Model for Twitter Emojis" Language Resources and Evaluation Conference (LREC) 2016. This technique extends solutions proven effective in the natural language processing domain as compact, memory-efficient summarizing representations of large-scale semantically redundant data.

Figure 5 illustrates a method for tag reduction according to the present principles. The person skilled in the art will appreciate that the mechanism is similar to that used in certain low-rank algorithms, like principle component analysis.

The method takes as input the tags entered by two (or more) users. In step S502, unwanted, errant tags such as spam and jokes that are too limited in scope are removed. The removal can, for example, be done by checking the frequency of tags input by a plurality of users. If, for a given number of tags, a certain one has only been input a number of times corresponding to a ratio between number of tag to number of users below a given threshold, then it may be assumed that the tag in question is errant and that it thus can be removed. In other words, unique or rare tags can be removed.

In step S504, remaining tags are compared pairwise to form a similarity matrix. Tags whose pairwise similarity is less than a given threshold - i.e., more similar that not - are merged and henceforth treated as one tag. As before, the pairwise comparison can be based on, or use the methods or results of, methods such as the one described by Barbieri. This comparison can improve the quality of the user comparison and also reduce the storage requirements of the similarity matrix. As a simple example, "#smiley" and "☺" can be merged in this step. Likewise, smileys with different design but the same semantics can also be merged, examples being female and male smileys and smileys having different colour.

After step S504, the number of different tags is likely to have been reduced to a manageable number. However, the semantics behind different tags may still be overlapping. For example, while a "funny" tag may be very different from a "scary" tag, a "romantic" tag may be similar to a "pleasant" tag. Hence, in step S506, a similarity index is calculated for each pair of tags, and a similarity matrix is formed to express the similarity between these remaining tags.

In step S508, the user similarity is calculated by computing the correlation between users. $X$ and $Y$ are the tag-content matrix of two users $x$ and $y$, where

$$X_{us} = \begin{cases} 1 \text{ if tag } u \text{ is used by user } x \text{ at time slice } s \\ 0 \text{ otherwise} \end{cases},$$

and

$$Y_{vs} = \begin{cases} 1 \text{ if tag } v \text{ is used by user } y \text{ at time slice } s \\ 0 \text{ otherwise} \end{cases}$$

Time slice refers to automatically generated time segments. In other words, did the user input a tag during a given time period? A time slice can be fixed (e.g. every second), generated using automatic boundary detection or using time boundaries via the users' segment selection.

$W$ is the tag similarity matrix, where $W_{uv}$ is a value between -1 and 1, representing the similarity between tags $u$ and $v$. $W_{uv} = 1$ if the tags are identical and $W_{uv} = 0$ if they are completely unrelated; $W_{uu} = 1$ for all $u$.

A natural choice of $W$ is such that $W_{ij}$ captures the cosine similarity between learned vector representations (learned using for example the techniques of Barbieri et al., and Mikolov et al.) The process can be summarized as follows:

    1) Compute the Tag Co-occurance Matrix:

$$T_{ij} = \#\ times\ tag\ i\ and\ j\ were\ used\ to\ describe\ identical\ content$$

2) Factorize the pairwise mutual information matrix; that is, find the $X$ where

$$(X^T X)_{ij} = \log\left(\frac{CT_{ij}}{f_i f_j}\right)$$

where $C$ is the total number of tag usages, and $f_i$, $f_j$ is the number of times tag $i, j$ respectively is used. Typically, the number of rows in $X$ is small, which typically reduces the storage requirements. (In comparison, the size of $T$ is the number of tags squared, which may be very large). Each column of $X$ is now the low-dimensional vector representation of each tag, which is used in tag reduction.

3) Compute the tag similarity matrix

$$W_{ij} = \text{cosine distance between } X_i \text{ and } X_j := \frac{\sum_k X_{ik} X_{jk}}{\sqrt{\sum_k X_{ik}^2 \sum_k X_{jk}^2}}$$

The values $W_{ij}$ are always between -1 (exactly opposite, e.g. happy vs sad) and 1 (identical), where a value of 0 represents no correlation (e.g. confusing vs sad)

The correlation between these two users $x$ and $y$ for a specific piece of content can be calculated as

$$C(x,y) = \sum_s \sum_v \sum_u X_{us} W_{uv} Y_{vs}$$

and the overall similarity between the two users is the sum correlation for all commonly watched content. This measure of similarity is more nuanced than just counting the amount of content shared between two users, or comparing their ratings, as two users may watch and like the same type of content for different reasons.

To determine interest groups, step S406 in Figure 4, a weighted undirected graph is constructed, where each node is a user and each edge weight is the similarity between the connected users connected by the edge. It is preferred that an edge weight lower than a given threshold is set to 0, and that the two nodes connected by the edge are considered disconnected. An interest group is detected as a subset of nodes that, amongst themselves, have a certain amount of connectivity; for example, the minimum edge degree in the induced graph is more than half the size of the community. Note that though there may be billions of nodes, it is likely that there will be at most thousands of identified communities such as for example sci-fi addicts, Leo DiCaprio fans, etc. It is noted that while the initial generation of interest groups is computationally expensive, the storage and use of interest group labels is cheap. Additionally, the computational cost of interest group identification can be significantly reduced if users are added one at a time, for example using an online algorithm.

As will be appreciated, the present principles can provide more relevant user tags as the tags can relate to clips of longer media items. In addition, the present principles can provide a feedback system to train tag refinement.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

## Claims

1. A method at a server device comprising:

    collecting (S304) tags for a plurality of clips, the clips being segments of media items, the tags input by a plurality of users;
    clustering (S306) users into interest groups based on similarities of the tags input by the users for the clips;
    adapting (S308) parameters for a content related algorithm for a user based on the at least one interest group to which the user belongs; and
    providing (S310), using the content related algorithm, clips to the user.

2. The method of claim 1, wherein the clips are associated with a plurality of users.

3. The method of claim 1, wherein the content related algorithm is for at least one of filtering of clips, themed stitching of clips and recommendation of clips.

4. The method of claim 3, wherein recommendation of clips comprises proposing a playlist of clips.

5. The method of claim 1, wherein the providing comprises preparing clips for viewing by the user.

6. The method of claim 1, further comprising, between the collecting and the clustering, performing tag reduction for the tags.

7. The method of claim 6, wherein the tag reduction comprises comparing (S504) tags pairwise to determine similarity and merging tags of each pair for which the similarity is below a given threshold.

8. A server device (120) comprising:

a communictions interface (123) configured to collect tags for a plurality of clips, the clips being segments of media items, the tags input by a plurality of users; and
at least one hardware processor (121) configured to:

cluster users into interest groups based on similarities of tags for the clips;
adapt parameters for a content related algorithm for a user based on the at least one interest group to which the user belongs; and
provide, using the content related algorithm, clips to the user.

9. The server device of claim 8, wherein the clips are associated with a plurality of users.

10. The server device of claim 8, wherein the content related algorithm is for at least one of filtering of clips, themed stitching of clips and recommendation of clips.

11. The server device of claim 10, wherein recommendation of clips comprises proposing a playlist of clips.

12. The server device of claim 8, wherein the providing comprises preparing clips for viewing by the user.

13. The server device of claim 8, wherein the at least one hardware processor is further configured to perform tag reduction for the tags.

14. The server device of claim 13, wherein the tag reduction comprises comparing tags pairwise to determine similarity and merging tags of each pair for which the similarity is below a given threshold.

15. A non-transitory computer readable storage medium comprising program code instructions executable by a processor for implementing the steps of a method according to at least one of claims 1 and 7.

Figure 1

| S202 | User device receives user input to select a clip |
|---|---|

| S204 | User device adds selected clip to a set of user selected clips |
|---|---|

| S206 | User device receives semantic tag for selected clip from user |
|---|---|

| S208 | Server prepares clips for viewing |
|---|---|

Figure 2

| S402 | Server receives tags from users |
|---|---|

| S404 | Server performs tag reduction |
|---|---|

| S406 | Server identifies interest groups |
|---|---|

| S408 | Server analyses behavior of users in interest groups |
|---|---|

Figure 4

Figure 3

S502    Remove errant tags

S504    Compare tags pairwise

S506    Calculate similarity index for each tag pair

S508    Calculate user similarity

Figure 5

Europäisches
Patentamt

European
Patent Office

Office européen
des brevets

## EUROPEAN SEARCH REPORT

Application Number

EP 16 30 6770

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/300547 A1 (BATES KEITH M [CA] ET AL) 3 December 2009 (2009-12-03) * abstract; claim 1; figure 3 * * paragraph [0015] - paragraph [0023] * * paragraph [0034] - paragraph [0155] * ----- | 1-15 | INV. G06F17/30 |

TECHNICAL FIELDS
SEARCHED      (IPC)

G06F

The present search report has been drawn up for all claims

| Place of search | Date of completion of the search | Examiner |
|---|---|---|
| Munich | 21 April 2017 | König, Wolfgang |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 16 30 6770

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2017

| Patent document cited in search report | Publication date | Patent family member(s) | Publication date |
|---|---|---|---|
| US 2009300547 A1 | 03-12-2009 | CA 2634020 A1<br>US 2009300547 A1 | 30-11-2009<br>03-12-2009 |

EPO FORM P0459

For more details about this annex : see Official Journal of the European Patent Office, No. 12/82

**EP 3 340 073 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2432243 A

- US 20140074866 A

### Non-patent literature cited in the description

- **MIKOLOV et al.** Distributed Representations of Words and Phrases and their Compositionality. *NIPS,* 2013

- **BARBIERI et al.** What does this Emoji Mean? A Vector Space Skip-Gram Model for Twitter Emojis. *Language Resources and Evaluation Conference (LREC),* 2016